# EUROPEAN PATENT SPECIFICATION

(11) **EP 3 767 788 B1**
(45) Date of publication and mention of the grant of the patent: **07.12.2022**
(21) Application number: 19186913.0
(22) Date of filing: 18.07.2019
(51) Int. Cl.: H02J 9/06, H02J 7/00

(54) **EMERGENCY LIGHTING DEVICE**
NOTBELEUCHTUNGSVORRICHTUNG
DISPOSITIFDISPOSITIF D'ÉCLAIRAGE D'URGENCE

(43) Date of publication of application: 20.01.2021
(73) Proprietor: Tridonic GmbH & Co. KG, 6851 Dornbirn (AT)
(72) Inventor: Wilson, Ian, Sunderland, SR33RH (GB); de Menezes, Cristiano, Durham, DH1 1pf (GB)
(74) Representative: Rupp, Christian

(56) References cited:
- EP-A2- 0 455 084
- CN-A- 107 054 093
- JP-A- H1 194 623
- JP-A- 2013 242 970

## Description

### TECHNICAL FIELD OF THE INVENTION

The invention relates to an emergency lighting device.

### BACKGROUND OF THE INVENTION

Nowadays, rechargeable battery is being widely used in various kind of electronic device, such as portable devices, uninterrupted power supply (UPS) system, electrical vehicle, etc.

Among the electro-chemical technologies which are used to produce batteries, the most well-known solutions are ultracapacitors, lithium ion batteries (Li-ion), lead-acid batteries and flow batteries.

Batteries have some advantages with respect to other storage systems, namely, higher charge efficiency, responsiveness and simplicity of installation. For example, Li-ion batteries exhibit high charge efficiency, near 99%, and high energy efficiency, between 86% and 99%, depending on the charge and discharge C-rate

In order to sense the current flowing from a battery during a discharging event, especially in order to drive an emergency lighting device, a closed loop current monitoring of the battery can be done by using sensing devices such as resistors, current transformers, low value resistors and amplifiers.

In general, an open-loop Hall-effect sensor employs a magnetic transducer to create a voltage that is proportional to the current being sensed. This signal is then amplified to provide an analog output signal proportional to the current flowing in the conductor. The conductor is fed through the center of a ferromagnetic core to concentrate the field and the magnetic transducer is placed in the gap of the core.

In an open-loop configuration, any non-linearity or drift in the sensitivity of the Hall-effect current sensor IC over temperature can produce error.

A closed-loop sensor uses a coil that is actively driven by the current sensor IC to produce a magnetic field that opposes the field produced by the current in the conductor.

The Hall sensor then observes a net zero magnetic field at the transducer. The output is generated by a resistor that has a voltage proportional to the current being driven into the coil, which is also proportional to the current flowing in the primary conductor leveraged by the number of turns of the coil wound around the magnetic core.

Closed-loop current sensors not only require ferromagnetic cores but also a coil and additional higher power amplifiers to drive the coil. While closed-loop current sensors are more complex than an open loop configuration, they do eliminate the sensitivity error associated with the Hall sensor IC, since the system is being operated at just a single point at zero field.

Closed-loop and open-loop Hall-effect current sensors generally have the same zero amp output voltage performance if designed properly, and so open- and closed-loop sensor zero amp detection accuracy are very similar.

Moreover, closed-loop sensors are larger in size and take up more printed circuit board (PCB) area than open-loop solutions. They also consume more power as they need to drive the compensation coil and are more expensive because of the additional coil and coil drive circuitry.

However, the above methods used to sense the discharge current of a battery have, for example, the disadvantage that a resistor with enough accuracy will dissipate significant power, a current transformer can be prohibitive in terms of cost and, moreover, a low value resistor and amplifier may increase costs significantly as well as size.

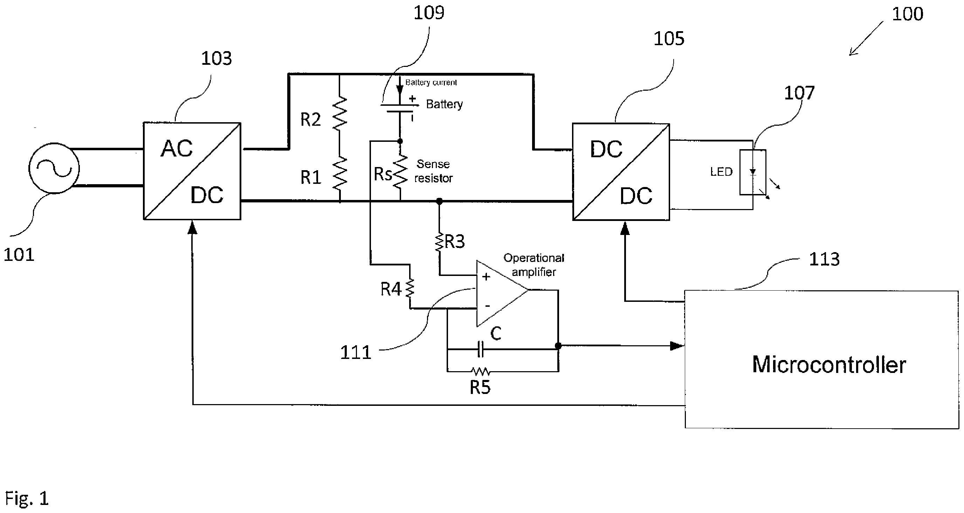

Figure 1 shows an example of an emergency lighting device 100 used to measure the battery discharge current in an emergency mode (mains power failure) according to prior art. Such an arrangement is disclosed for example in the document JP 2013 242970 A.

The emergency lighting device 100 comprises an AC mains voltage supply which is supplied to a AC-to-DC converter 103 for charging the battery. Moreover, the device 100 comprises a battery 109 in series with a sense resistor Rs for the battery current, five other resistors R1,...,R5, an operational amplifier 111, a DC-to-DC converter 105 supplying an LED load 107 and a microcontroller 113 controlling the charging through the AC/DC converter 103 as well as the discharging through the DC/DC converter 105. current. However, in order to minimize losses in emergency mode and reduced thermal strain, the sense resistor Rs is usually of a small value. Therefore, in order to achieve reasonable accuracy, it may require an amplification stage by means of the amplifier 111. This disadvantageously incurs in extra ""bill of materials"" (BOM) cost and print circuit board (PCB) area.

Thus, it is an objective to provide for an improved current sensing for an emergency lighting device having a battery.

### SUMMARY OF THE INVENTION

The object of the present invention is achieved by the solution provided in the enclosed independent claims. Advantageous implementations of the present invention are further defined in the dependent claims.

According to a first aspect, the invention relates to an emergency lighting device, comprising a sensing resistor and a switch, wherein the switch is configured to shunt the sensing resistor, a battery designed for producing a discharge current to be fed to terminals for emergency light means, and a control circuitry. The control circuitry is configured to control, in an emergency mode, in at least one first time period of the discharge, the battery discharge current selectively in closed loop mode using a discharge current feedback signal, and in open loop mode in at least one second time period of the discharge.

In an implementation form of the first aspect, a duty cycle of the closed loop mode versus the open loop mode is fixed.

In an implementation form of the first aspect, a duty cycle of the closed loop mode versus the open loop mode is adaptive.

In an implementation form of the first aspect, the duty cycle of the closed loop mode versus the open loop mode decreases with ongoing battery discharge operation.

In an implementation form of the first aspect, the duty cycle of the closed loop mode versus the open loop mode is based on a battery voltage detection.

In an implementation form of the first aspect, the duty cycle in a battery discharge mode is smaller than 1%.

In an implementation form of the first aspect, the duty cycle in a battery charge mode is up to 10%.

In an implementation form of the first aspect, in a start-up phase of the emergency mode, the control circuitry controls the discharge current in closed loop mode by means of the sensing resistor.

In an implementation form of the first aspect, an end of the start-up phase is based on a time definition.

In an implementation form of the first aspect, an end of the start-up phase is based on a monitoring of a battery voltage.

According to a second aspect, the invention relates to a method for operating an emergency lighting device, comprising the steps of producing a battery discharge current to be fed to terminals for emergency light means; controlling, in an emergency mode, a battery discharge current selectively in open loop mode by shunting a sensing resistor of the emergency lighting device and in closed loop mode.

### BRIEF DESCRIPTION OF THE DRAWINGS

The invention will be explained in the followings together with the figures.
- Fig. 1: shows an embodiment of an emergency lighting device according to prior art;
- Fig. 2: shows a first exemplary embodiment of an emergency lighting device according to the invention;
- Fig. 3: shows a second exemplary embodiment of an emergency lighting device according to the invention;
- Fig. 4: shows a schematic diagram of an operation switching of a battery between open loop mode and closed loop mode in an emergency lighting device according to the invention; and
- Fig. 5: shows a schematic diagram of a method for operating an emergency lighting device according to the invention.

### DETAILED DESCRIPTION OF THE PREFERRED EMBODIMENTS

### DETAILED DESCRIPTION OF THE PREFERRED EMBODIMENTS

Aspects of the present invention are described herein in the context of an emergency lighting device.

The present invention is described more fully hereinafter with reference to the accompanying drawings, in which various aspects of the present invention are shown. This invention however may be embodied in many different forms and should not be construed as limited to the various aspects of the present invention presented through this disclosure. Rather, these aspects are provided so that this disclosure will be thorough and complete, and will fully convey the scope of the present invention to those skilled in the art. The various aspects of the present invention illustrated in the drawings may not be drawn to scale. Rather, the dimensions of the various features may be expanded or reduced for clarity. In addition, some of the drawings may be simplified for clarity. Thus, the drawings may not depict all of the components of a given apparatus.

Various aspects of an emergency lighting device will be presented. However, as those skilled in the art will readily appreciate, these aspects may be extended to aspects of emergency lighting devices without departing from the invention, as defined by the appended claims.

It is further understood that the aspect of the present invention might contain integrated circuits that are readily manufacturable using conventional semiconductor technologies, such as complementary metal-oxide semiconductor technology, short "CMOS". In addition, the aspects of the present invention may be implemented with other manufacturing processes for making optical as well as electrical devices.

Reference will now be made in detail to implementations of the exemplary aspects as illustrated in the accompanying drawings. The same references signs will be used throughout the drawings and the following detailed descriptions to refer to the same or like parts.

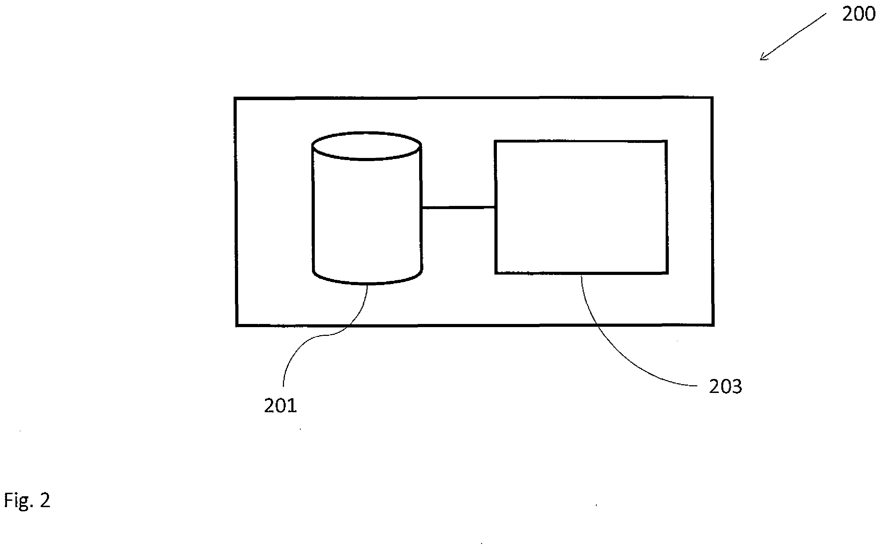

Now referring to Fig. 2, a first exemplary embodiment of an emergency lighting device 200 according to the invention is shown.

The emergency lighting device 200 comprises a battery 201 designed for producing a discharge current to be fed to terminals for emergency light means.

Furthermore, the emergency lighting device 200 comprises a control circuitry 203, wherein the control circuitry 203 controls, in an emergency mode, in at least one first time period of the discharge, the battery discharge current selectively in closed loop mode using a discharge current feedback signal, and open loop mode in at least one second time period of the discharge. The discharge current can be controlled e.g. by controlling a DC/DC converter driving a LED load.

This provides the advantage that low power current sensing with acceptable accuracy and low cost is achieved, since, for example, there is no use made of an amplifier.

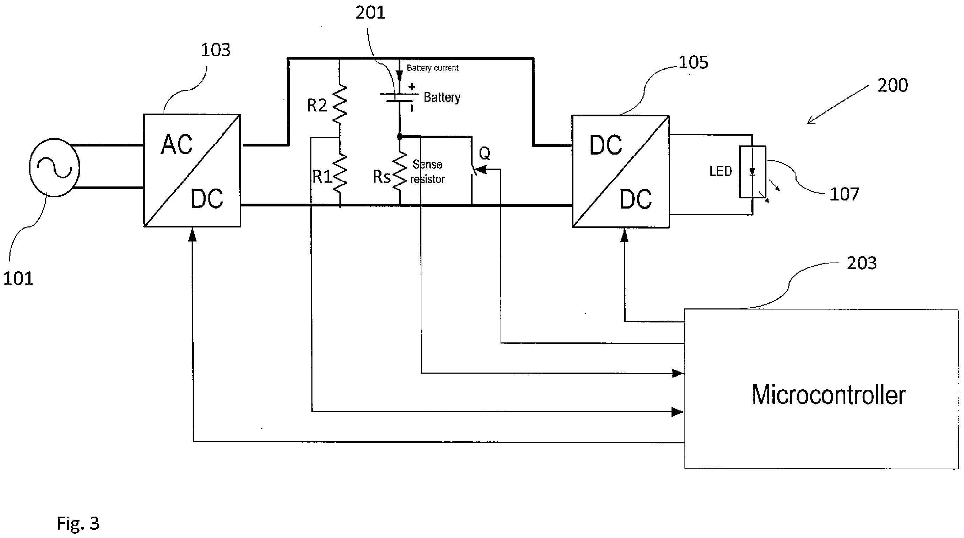

Figure 3 shows a more detailed embodiment of the emergency lighting device 200 according to the invention.

The emergency lighting device 200 comprises an AC voltage 101 which is supplied to a AC-to-DC converter 103. Moreover, the device 200 comprises a battery 201 in series with a sense resistor Rs, two other resistors R1 and R2 for sensing the battery voltage, a switch Q for selectively shunting the sense resistor Rs, a DC-to-DC converter 105 supplying an LED 107 and a microcontroller or control circuitry 203 being provided with the sense signals and controlling the AC/DC converter 103, the sense resistor Rs, and the DC/DC converter 105.

In order to generate a desired charge or discharge current, the unit will operate with the switch Q open and using the sense resistor Rs to provide necessary feedback by means of a voltage measurement across the resistor.

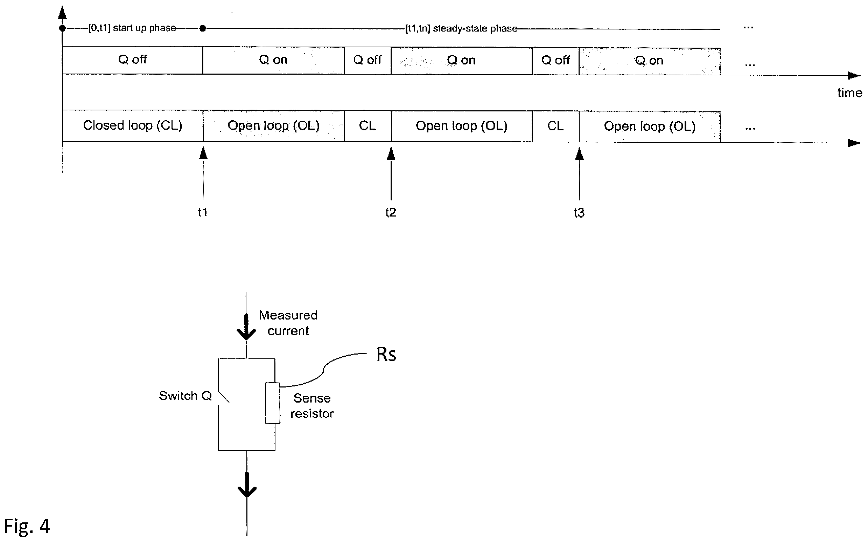

Once the voltage is sampled and the unit enters a steady-state mode, the operation will alternate between two modes as schematically shown in Fig. 4:
- Open loop control of the battery current (especially during discharge): the switch Q will be closed for most of the time and the converter parameters such as duty cycle and frequency remain unchanged. In this mode, the current will flow through Q which has a significantly lower resistance than the sense resistor Rs;
- closed loop control of the battery current: for a short period of time, the switch Q will be opened and the converter 103 will try to adjust its operation parameters in order to maintain the charge the sensed current in case that has deviated from the target.

As shown in Fig. 4, during the start-up phase, the sense resistor Rs would be unshunted (Q off) in order to establish a steady-state operation by the converter 105. This period may last for up to 30 seconds. Once that is reached, the operation mode would transition to a constant alternation between closed loop and open loop.

If there are not any significant changes to the battery voltage (<1% since the last closed loop cycle), the converter 105 would operate in a duty cycle of 1% i.e. it would be in closed loop for 1% of the time.

If the battery voltage changes significantly (>1% since the last closed loop cycle), then the duty cycle will change to 10%. Since for most of the battery discharge period of 1-3 hours the battery voltage is stable, the open loop operation would be the norm.

This provides the advantage that a good accuracy due to adequately sized sense resistor Rs is achieved.

Furthermore, there is no need for an amplifier circuit which adds cost and size.

Moreover, there is an improvement in efficiency from using a simple resistor Rs due to the resistor Rs being shunted for most of the time by low resistance switch Q.

Furthermore, a lower discharge current is achieved due to higher efficiency with the potential of using a smaller and cheaper battery pack.

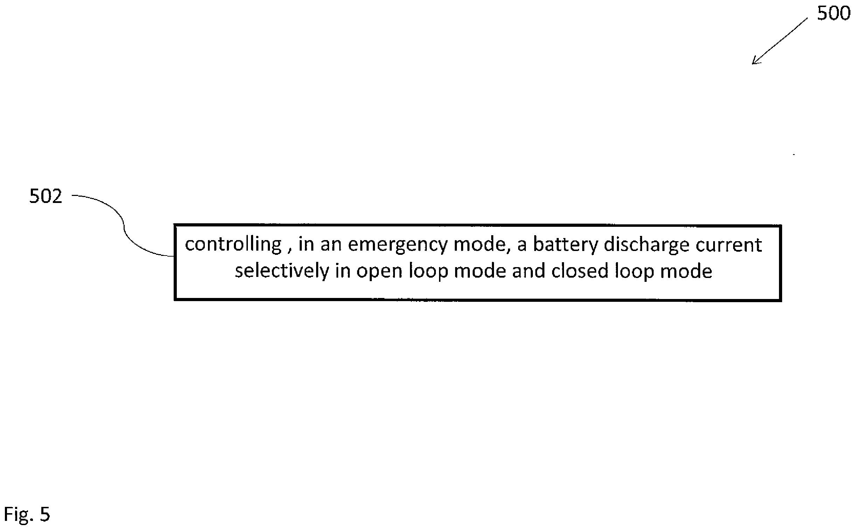

Figure 5 shows a schematic diagram of a method 500 for operating an emergency lighting device 200 according to the invention.
- controlling 502, in an emergency mode, a battery discharge current selectively in open loop mode and closed loop mode. All features of all embodiments described, shown and/or claimed herein can be combined with each other.

While various embodiments of the present invention have been described above, it should be understood that they have been presented by way of example only and not limitation. Numerous changes to the disclosed embodiments can be made in accordance with the disclosure herein without departing from the scope of the invention, as defined by the appended claims.

Although the invention has been illustrated and described with respect to one or more implementations, equivalent alternations and modifications will occur to those skilled in the art upon the reading of the understanding of the specification and the annexed drawings. In addition, while a particular feature of the invention may have been disclosed with respect to only of the several implementations, such features may be combined with one or more other features of the other implementations as may be desired and advantage for any given or particular application.

## Claims

1. Emergency lighting device (200), comprising:
- a battery (201) configured for producing a discharge current to be fed to terminals for emergency light means;
- a sensing resistor (Rs) connected in series with the battery, and a switch (Q) configured to selectively shunt the sensing resistor (Rs); and **characterised by**
- a control circuitry (203) configured for controlling, in an emergency mode, in at least one first time period of the discharge, the battery discharge current selectively in closed loop mode using a discharge current feedback signal, and in open loop mode in at least one second time period of the discharge, by shunting the sensing resistor.

2. The emergency lighting device (200) of claim 1, wherein a duty cycle of the closed loop mode versus the open loop mode is fixed.

3. The emergency lighting device (200) of claim 1, wherein a duty cycle of the closed loop mode versus the open loop mode is adaptive.

4. The emergency lighting device (200) of claim 3, wherein the duty cycle of the closed loop mode versus the open loop mode decreases with ongoing battery discharge operation.

5. The emergency lighting device (200) of claim 3, wherein the duty cycle of the closed loop mode versus the open loop mode is based on a battery voltage detection.

6. The emergency lighting device (200) of any one of the preceding claims 2 to 5, wherein the duty cycle in a battery discharge mode is smaller than 1%.

7. The emergency lighting device (200) of any one of the preceding claims 2 to 5, wherein the duty cycle in a battery charge mode is up to 10%.

8. The emergency lighting device (200) of any one of the claims 1 to 7, wherein the first time period is a start-up phase of the emergency mode, during which phase the control circuitry (203) controls the discharge current in closed loop mode by means of the sensing resistor (Rs).

9. The emergency lighting device (200) of claim 8, wherein an end of the start-up phase is based on a time definition.

10. The emergency lighting device (200) of claim 8, wherein an end of the start-up phase is based on a monitoring of a battery voltage.

11. Method (500) for operating an emergency lighting device (200), comprising the step of:
- producing a battery discharge current to be fed to terminals for emergency light means;
- controlling (502), in an emergency mode, the battery discharge current selectively in close loop mode in at least one first time period of the discharge and in open loop mode, by shunting a sensing resistor (Rs) of the emergency lighting device, in at least one second time period of the discharge.

## Patentansprüche

1. Notbeleuchtungsvorrichtung (200), umfassend:
- eine Batterie (201), die dazu konfiguriert ist, einen Entladestrom zu erzeugen, der Anschlüssen für Notlichtmittel zuzuführen ist;
- einen Erfassungswiderstand (Rs), der mit der Batterie in Reihe geschaltet ist, und einen Schalter (Q), der konfiguriert ist, um den Erfassungswiderstand (Rs) selektiv in Nebenschluss zu legen; und **gekennzeichnet durch**
- eine Steuerschaltung (203), die konfiguriert ist, um in einem Notfallmodus in mindestens einem ersten Zeitraum der Entladung den Batterieentladestrom selektiv in geschlossenem Regelkreismodus unter Verwendung eines Entladestrom-Rückkopplungssignals und in mindestens einem zweiten Zeitraum der Entladung in offenem Regelkreismodus durch Nebenschließen des Erfassungswiderstands zu steuern.

2. Notbeleuchtungsvorrichtung (200) nach Anspruch 1, wobei ein Arbeitszyklus des geschlossenen Regelkreismodus gegenüber dem offenen Regelkreismodus festgelegt ist.

3. Notbeleuchtungsvorrichtung (200) nach Anspruch 1, wobei ein Arbeitszyklus des geschlossenen Regelkreismodus gegenüber dem offenen Regelkreismodus adaptiv ist.

4. Notbeleuchtungsvorrichtung (200) nach Anspruch 3, wobei der Arbeitszyklus des geschlossenen Regelkreismodus gegenüber dem offenen Regelkreismodus mit laufendem Batterieentladevorgang abnimmt.

5. Notbeleuchtungsvorrichtung (200) nach Anspruch 3, wobei der Arbeitszyklus des geschlossenen Regelkreismodus gegenüber dem offenen Regelkreismodus auf einer Batteriespannungserfassung basiert.

6. Notbeleuchtungsvorrichtung (200) nach einem der vorstehenden Ansprüche 2 bis 5, wobei der Arbeitszyklus in einem Batterieentlademodus kleiner als 1 % ist.

7. Notbeleuchtungsvorrichtung (200) nach einem der vorstehenden Ansprüche 2 bis 5, wobei der Arbeitszyklus in einem Batterielademodus bis zu 10 % beträgt.

8. Notbeleuchtungsvorrichtung (200) nach einem der Ansprüche 1 bis 7, wobei der erste Zeitraum eine Anlaufphase des Notfallmodus ist, während der die Steuerschaltung (203) den Entladestrom im geschlossenen Regelkreismodus mittels des Erfassungswiderstands (Rs) steuert.

9. Notbeleuchtungsvorrichtung (200) nach Anspruch 8, wobei ein Ende der Anlaufphase auf einer Zeitdefinition basiert.

10. Notbeleuchtungsvorrichtung (200) nach Anspruch 8, wobei ein Ende der Anlaufphase auf einer Überwachung einer Batteriespannung basiert.

11. Verfahren (500) zum Betreiben einer Notbeleuchtungsvorrichtung (200), umfassend die Schritte:
- Erzeugen eines Batterieentladestroms, der Anschlüssen für Notlichtmittel zuzuführen ist;
- Steuern (502), in einem Notfallmodus, des Batterieentladestroms selektiv im geschlossenen Regelkreismodus in mindestens einem ersten Zeitraum der Entladung und im offenen Regelkreismodus, indem ein Erfassungswiderstand (Rs) der Notbeleuchtungsvorrichtung in Nebenschluss gelegt wird, in mindestens einem zweiten Zeitraum der Entladung.

## Revendications

1. Dispositif d'éclairage de secours (200) comprenant :
- une batterie (201) configurée pour produire un courant de décharge à alimenter aux bornes pour un moyen d'éclairage de secours ;
- une résistance de détection (Rs) connectée en série avec la batterie, et un commutateur (Q) configuré pour dériver sélectivement la résistance de détection (Rs) ; et **caractérisé par**
- une circuiterie de commande (203) configurée pour commander, dans un mode de secours, dans au moins une première période de temps de la décharge, le courant de décharge de batterie sélectivement en mode à boucle fermée à l'aide d'un signal de rétroaction de courant de décharge, et en mode à boucle ouverte dans au moins une seconde période de temps de la décharge, en dérivant la résistance de détection.

2. Dispositif d'éclairage de secours (200) selon la revendication 1, dans lequel un cycle de service du mode à boucle fermée par rapport au mode à boucle ouverte est fixe.

3. Dispositif d'éclairage de secours (200) selon la revendication 1, dans lequel un cycle de service du mode à boucle fermée par rapport au mode à boucle ouverte est adaptatif.

4. Dispositif d'éclairage de secours (200) selon la revendication 3, dans lequel le cycle de service du mode à boucle fermée par rapport au mode à boucle ouverte diminue avec l'opération de décharge de batterie en cours.

5. Dispositif d'éclairage de secours (200) selon la revendication 3, dans lequel le cycle de service du mode à boucle fermée par rapport au mode à boucle ouverte est basé sur une détection de tension de batterie.

6. Dispositif d'éclairage de secours (200) selon l'une quelconque des revendications précédentes 2 à 5, dans lequel le cycle de service dans un mode de décharge de batterie est inférieur à 1 %.

7. Dispositif d'éclairage de secours (200) selon l'une quelconque des revendications précédentes 2 à 5, dans lequel le cycle de service dans un mode de charge de batterie est jusqu'à 10 %.

8. Dispositif d'éclairage de secours (200) selon l'une quelconque des revendications 1 à 7, dans lequel la première période de temps est une phase de démarrage du mode de secours, pendant laquelle la circuiterie de commande (203) commande le courant de décharge en mode à boucle fermée au moyen de la résistance de détection (Rs).

9. Dispositif d'éclairage de secours (200) selon la revendication 8, dans lequel une fin de la phase de démarrage est basée sur une définition de temps.

10. Dispositif d'éclairage de secours (200) selon la revendication 8, dans lequel une fin de la phase de démarrage est basée sur une surveillance d'une tension de batterie.

11. Procédé (500) destiné au fonctionnement d'un dispositif d'éclairage de secours (200), comprenant les étapes suivantes :
- la production d'un courant de décharge de batterie à alimenter aux bornes pour un moyen d'éclairage de secours ;
- la commande (502), dans un mode de secours, du courant de décharge de batterie sélectivement en mode à boucle fermée dans au moins une première période de temps de la décharge et en mode à boucle ouverte, en dérivant une résistance de détection (Rs) du dispositif d'éclairage de secours, dans au moins une seconde période de temps de la décharge.
